# EUROPÄISCHE PATENTSCHRIFT

(11) **EP 1 841 972 B1**
(45) Veröffentlichungstag und Bekanntmachung des Hinweises auf die Patenterteilung: **30.03.2011**
(21) Anmeldenummer: 05817434.3
(22) Anmeldetag: 06.12.2005
(51) Int. Cl.: F16B 41/00

(54) **VERLIERGESICHERTE BEFESTIGUNGSSCHRAUBE**
SECURED FIXING SCREW
VIS DE FIXATION SECURISE CONTRE LA PERTE

(30) Priorität: 27.01.2005 DE 102005003844
(43) Veröffentlichungstag der Anmeldung: 10.10.2007
(73) Patentinhaber: Schaeffler Technologies GmbH & Co. KG, 91074 Herzogenaurach (DE)
(72) Erfinder: STEINMETZ, Theo, F-67590 Schweighouse (FR)
(86) Internationale Anmeldenummer: PCT/EP2005/013038
(87) Internationale Veröffentlichungsnummer: WO 2006/079388

(56) Entgegenhaltungen:
- DE-A1- 10 042 307
- DE-B- 1 085 127
- DE-U1- 29 820 776

## Beschreibung

### Gebiet der Erfindung

Die vorliegende Erfindung betrifft eine Verliersicherung und Transportsicherung für eine Verschraubung, mit der Bauelemente eines Zugmitteltriebs befestigt werden. Die Verschraubung wird vorzugsweise zur Befestigung einer Spannrolle, Umlenkrolle oder einer Spannvorrichtung des Zugmitteltriebs eingesetzt und umfasst eine form-und/oder kraftschlüssig auf einem Schraubenschaft lagefixierte elastische Hülse, die mit einer radialen Überdeckung in eine für die Verschraubung bestimmte Bohrung eingesetzt ist. Eine derartige Verlier-und Transportsicherung mit den Merkmalen des Oberbegriffs des Anspruchs 1 ist aus der DE 100 42 307 A1 bekannt.

### Hintergrund der Erfindung

Aus der DE 298 20 776 U1 ist eine derartige Verlier- und Transportsicherung bekannt. Diese Befestigung für eine Spannrolle bzw. eine Riemenrolle des Zugmitteltriebs umfasst eine Verschraubung, die Mittel einer Transportsicherung einschließt. Die Verschraubung ist dabei durch die Aufnahmebohrung eines Innenrings des Wälzlagers geführt, auf dem die Spannrolle bzw. Riemenrolle drehbar gelagert ist. Als Sicherung ist eine Dichtscheibe vorgesehen, mit der das Wälzlager der Spannrolle bzw. Riemenrolle gegen grobe Verunreinigungen wie Spritzwasser und große Staubpartikel wirksam geschützt ist. Die aus Blech hergestellte Dichtscheibe bildet am äußeren Umfang mit der Nabe der Laufrolle eine Labyrinthdichtung. Im Zentrum weist die Dichtscheibe eine Durchprägung auf, an deren Endbereich der Schraubenschaft kraftschlüssig gehalten ist. Diese bekannte Verlier- und Transportsicherung einer Verschraubung umfasst ein komplexes Blechformteil, dessen Herstellung hohe Kosten verursacht. Ein weiterer Nachteil besteht darin, dass die Verschraubung nicht unmittelbar in dem Lagerring sondern über die zentrale Aufnahmebohrung der Dichtscheibe zentriert ist, die an dem inneren Lagerring abgestützt ist.

Die DE 100 42 307 A1 offenbart eine Verlier- und/oder Transportsicherung für eine Schraube bei der ein zur Sicherung bestimmter scheibenförmiger Kunststoffkörper eingesetzt wird. Dieser Körper aus spritzfähigem Kunststoff wird unmittelbar auf den Schraubenschaft aufgespritzt. Die Verlier- und/oder Transportsicherung gemäß der DE 1 085 27B umfasst einen elastischen, ringförmig gestalteten Körper der formschlüssig in eine Längsnut des Schraubenschaftes positioniert ist.

### Zusammenfassung der Erfindung

Die Aufgabe der vorliegenden Erfindung besteht darin, eine Verlier- und Transportsicherung für eine Verschraubung zu schaffen, die kostengünstig herstellbar und montierbar ist, sowie eine wirksame Sicherung ermöglicht.

Erfindungsgemäß wird diese Aufgabe durch eine thermisch auf den Schraubenschaft aufgeschrumpfte Hülse gelöst, die eine konisch verlaufende Mantelfläche aufweist. Dabei ist der größte Durchmesser der Hülse im Einbauzustand zu dem Schraubenkopf der Verschraubung ausgerichtet. Diese Hülsengestaltung vereinfacht die Montage, ein Einführen der Schraube einschließlich der Sicherung in eine dafür vorgesehene Aufnahmebohrung. Die Hülse ist dazu bevorzugt so gestaltet, dass der konische Verlauf der Mantelfläche stirnseitig keine Stufe bildet, was sich vorteilhaft auf die Montage auswirkt.

In der Einbaulage ist die Hülse mittels einer Pressung plastisch verformt eingesetzt, die damit eine sichere Einbaulage der Verschraubung bewirkt. Die erfindungsgemäße Sicherung einer Verschraubung ist vorteilhaft auch bei einer größeren Durchmesserschwankung, der für die Verschraubung bestimmten Bohrungen einsetzbar. Damit kann folglich ein wirksamer Ausgleich von Fertigungstoleranzen erzielt werden. Weiterhin nimmt die als Sicherung gestaltete elastische Hülse keinen nachteiligen Einfluss auf das Anschraubmoment der Verschraubung, aufgrund der hohen Elastizität und der damit verbundenen Verformung der Hülse. Mit der als elastische Hülse gestalteten erfindungsgemäßen Verlier- und Transportsicherung ist die Haltekraft vorteilhaft leicht beeinflussbar. Beispielweise kann die Haltekraft der Verschraubung durch eine Variation der Länge und / oder der Wandstärke unmittelbar beeinflusst werden. Vorteilhafte Ausgestaltungen sind Gegenstand der abhängigen Ansprüche 2 bis 8.

Zur Erzielung einer definierten Halteposition der Hülse ist vorteilhaft der Innendurchmesser der Hülse so auf den Außendurchmesser der Verschraubung abgestimmt, dass sich einerseits eine wirksame Fixierung der Hülse einstellt und andererseits eine zerstörungsfreie Montage der Hülse auf den Schraubenschaft. Bevorzugt ist die Hülse auf dem Schraubenschaft der Verschraubung aufgeschrumpft.

Zur weiteren Lagesicherung der Hülse bietet es sich an, diese im Bereich eines Gewindeabschnitts auf den Schraubenschaft anzuordnen, wodurch sich gleichzeitig eine Kraft- und formschlüssige Befestigung der Hülse einstellt.

Die zur Sicherung der Verschraubung eingesetzte Hülse ist bevorzugt aus einem polymeren Werkstoff, vorzugsweise aus Polyamid hergestellt. Dieser Werkstoff besitzt einerseits eine ausreichende Festigkeit verbunden mit einer erforderlichen plastischen Verformbarkeit und ermöglicht außerdem eine kostengünstige Herstellung der Hülse.

### Kurze Beschreibung der Zeichnungen

Die Figur 2 zeigt ein Ausführungsbeispiel der Erfindung, das nachfolgend näher erläutert wird. Die Figuren 1 sowie 3 bis 5 zeigen nicht beanspruchte, das Verständnis der Erfindung erleichternde Lösungen von Verlier- und Transportsicherungen für Schrauben.

Es zeigen:
- Fig. 1: eine Schraube in Verbindung mit einer zylindrischen Hülse, die als Verlier- und Transportsicherung dient;
- Fig. 2: eine Schraube, auf der die zylindrische Hülse thermisch im Be- reich des Gewindeabschnitts aufgeschrumpft ist;
- Fig. 3: die Sicherung einer Verschraubung in Verbin- dung mit einer Spannvorrichtung;
- Fig. 4: eine Spannrolle für einen Zugmitteltrieb, verbunden mit einem Distanzstück, wobei die Verschraubung in Verbindung mit der Hülse alle Bauteile positioniert;
- Fig. 5: eine Verschraubung in Verbindung mit einer Spannrolle, die über zwei axial versetzt zueinander angeordnete Hülsen gesichert ist.

### Detaillierte Beschreibung der Zeichnungen

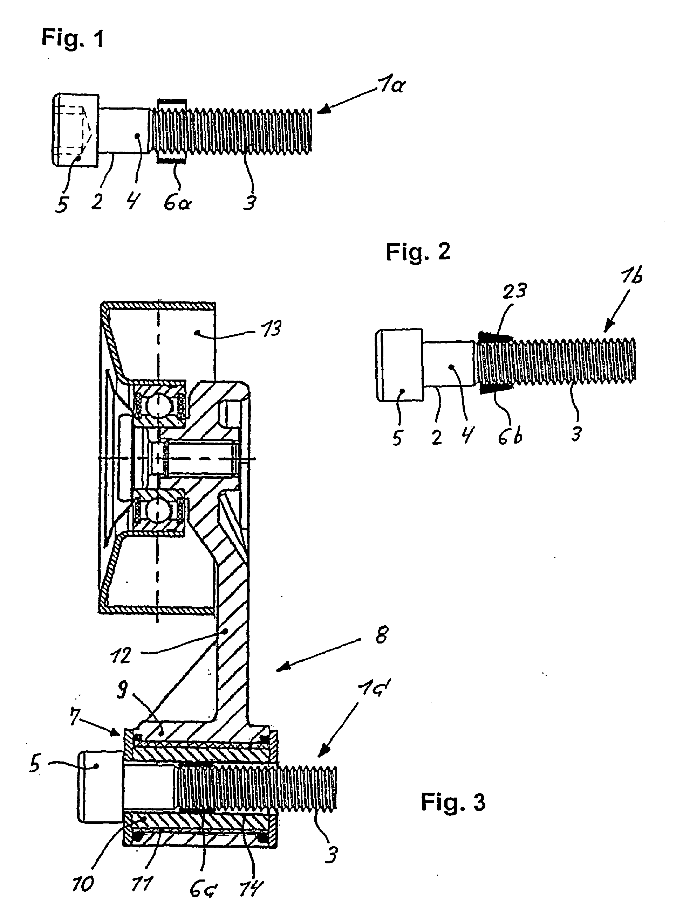

In Figur 1 ist eine Innensechskantschraube abgebildet, die als Verschraubung 1a für ein Bauteil eines Zugmitteltriebs einsetzbar ist. Ein Schraubenschaft 2 weist einen Gewindeabschnitt 3 sowie einen weiteren, eine glatte Oberfläche bildenden Abschnitt 4 auf, der sich zwischen einem Schraubenkopf 5 und dem Gewindeabschnitt 3 erstreckt. Der Gewindeabschnitt 3 ist versehen mit einer zylindrischen Hülse 6a, die zur Sicherung der Verschraubung 1a bestimmt ist, in dem diese beispielsweise in eine Aufnahmebohrung für die Verschraubung 1 a eingesetzt ist und damit den Aufnahmedurchmesser örtlich verengt. Durch den verengten Durchmesser einerseits und die elastische Hülse 6a andererseits ist die Verschraubung 1a in der Aufnahmebohrung verliergesichert gehalten.

Die Figur 2 zeigt die Verschraubung 1b in Verbindung mit einer thermisch aufgeschrumpften Hülse 6b. Diese Befestigungsart gewährleistet eine unverrückbare Fixierung der Hülse 6b auf dem Gewindeabschnitt 3 der Verschraubung 1b. Zur Erzielung einer ungehinderten Montage der Verschraubung 1b in eine dazu bestimmte Aufnahmebohrung weist die Hülse 6a eine konische Mantelfläche 23 auf, wodurch stirnseitig nahezu keine Stufe zwischen dem Gewindeabschnitt 3 und der Hülse 6a entsteht. Die Hülse 6a ist dazu so auf dem Gewindeabschnitt 3 aufgesetzt, dass deren größter Durchmesser in Richtung des Schraubenkopfs ausgerichtet ist.

Die Figur 3 zeigt die Verschraubung 1c, die verliergesichert in einem Drehlager 7 einer Spannvorrichtung 8 eingesetzt ist. Das Drehlager 7 umfasst eine Nabe 9, die gegenüber einer drehstarren Innenhülse 10 über ein Gleitlager 11 schwenkbar ist. Dabei ist die Nabe 9 einstückig mit einem Schwenkarm 12 verbunden, an dem endseitig eine Laufrolle 13 drehbar angeordnet ist. Die Spannvorrichtung 8 ist weiterhin mit einem in Figur 3 nicht abgebildeten Federmittel verbunden, mit dem die Laufrolle 13 kraftbeaufschlagt mit einem Zugmittel eines Zugmitteltriebs abgestützt ist. In eine Längsbohrung 14 der Innenhülse 10 ist die Verschraubung 1c eingesetzt, die mittels einer Hülse 6c verliergesichert ist. Die aus einem elastischen Material hergestellte, vorzugsweise thermisch auf dem Gewindeabschnitt 3 der Verschraubung 1 c befestigte Hülse 6c ist dabei mit einem Übermaß zu der Längsbohrung 14 eingesetzt, wodurch die Hülse 6c mit einer Anpresskraft an der Innenwandung der Längsbohrung 14 abgestützt ist.

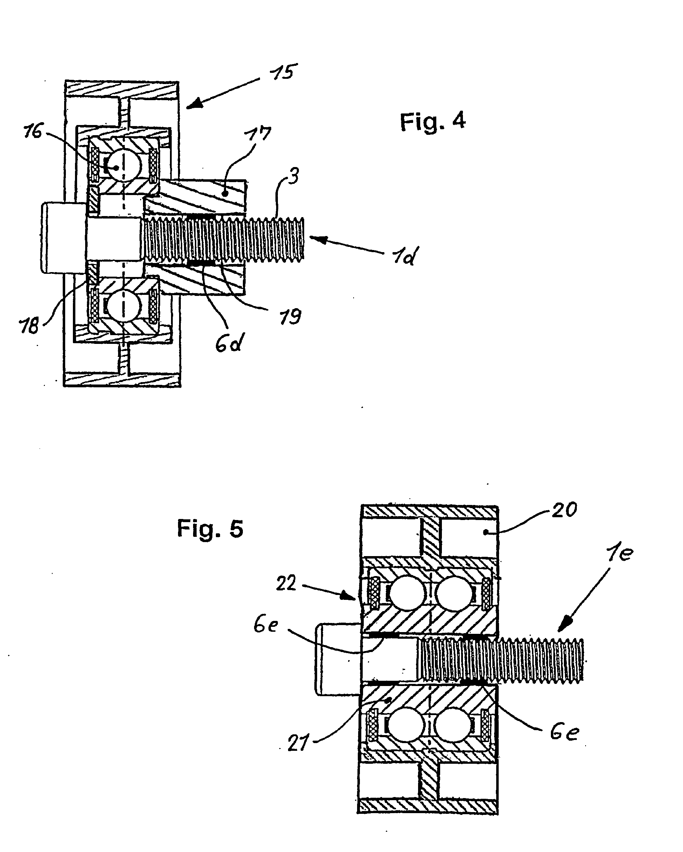

In Figur 4 ist eine Spannrolle 15 dargestellt, die über ein Wälzlager 16 drehbar ist. Der Spannrolle 15 ist ein Distanzstück 17 zugeordnet, mit dem beispielsweise eine definierte Einbaulage der Spannrolle 15 erzielbar ist. Die Verschraubung 1d in Verbindung mit der Hülse 6d bewirkt einen verlier- und transportgesicherten Zusammenhalt aller Bauteile der Spannrolle 15. Dazu ist die Verschraubung 1d durch eine stirnseitig an dem Wälzlager 16 abgestützte Zentrierscheibe 18 geführt sowie weiter durch die zentrale Bohrung des Distanzstücks 17. Die auf dem Gewindeabschnitt 3 der Verschraubung 1d fixierte Hülse 6d stützt sich außenseitig an der Innenwandung der Zentralbohrung 19 des Distanzstücks 17 ab und bewirkt damit eine ausreichende Haltekraft der Verschraubung 1d in dem Distanzstück 17, wodurch gleichzeitig alle übrigen Bauteile der Spannrolle 15 zusammengehalten sind.

In Figur 5 ist eine weitere Spannrolle 20 dargestellt, die auch als Umlenkrolle zu bezeichnen ist, welche über ein als zweireihiges Kugellager ausgebildetes Wälzlager 22 drehbar gelagert ist. Zur Verlier- und Transportsicherung der Verschraubung 1 e weist diese zwei axial zueinander versetzte Hülsen 6e auf, die in dem Innenring 21 des Wälzlagers 22 positioniert sind. Die zwei axial versetzt zueinander angeordneten Hülsen 6e verhindern wirkungsvoll eine Verkippung der Verschraubung 1e gegenüber dem Innenring 21 des Wälzlagers. Die damit sich einstellende Zentrierung der Verschraubung 1e ermöglicht eine automatisierte Montage der Spannrolle 20.

### Bezugszahlen

- 1 a: Verschraubung
- 1 b: Verschraubung
- 1 c: Verschraubung
- 1d: Verschraubung
- 1e: Verschraubung
- 2: Schraubenschaft
- 3: Gewindeabschnitt
- 4: Abschnitt
- 5: Schraubenkopf
- 6a: Hülse
- 6b: Hülse
- 6c: Hülse
- 6d: Hülse
- 6e: Hülse
- 7: Drehlager
- 8: Spannvorrichtung
- 9: Nabe
- 10: Innenhülse
- 11: Gleitlager
- 12: Schwenkarm
- 13: Laufrolle
- 14: Längsbohrung
- 15: Spannrolle
- 16: Wälzlager
- 17: Distanzstück
- 18: Zentrierscheibe
- 19: Zentralbohrung
- 20: Spannrolle
- 21: Innenring
- 22: Wälzlager
- 23: Mantelfläche

## Patentansprüche

1. Verlier- und Transportsicherung für eine Verschraubung (1b), die eingesetzt ist, um Bauelemente eines Zugmitteltriebs, vorzugsweise eine Spannrolle (15, 20) oder ein Spannvorrichtung (8) zu befestigen, umfassend, eine form- und / oder kraftschlüssig auf einem Schraubenschaft (2) lagefixierte, aus einem elastischen Werk- stoff hergestellte zylindrische Hülse (6b) wobei die Verschraubung (1b) mittels dieser Hülse (6b) gesichert ist, und wobei die Hülse (6b) mit einer radialen Überdeckung in eine für die Verschraubung (1 b) bestimmte Bohrung einsetzbar ist, **dadurch gekennzeichnet, dass** die Hülse (6b) auf dem Schraubenschaft (2) thermisch aufgeschrumpft ist und eine konisch verlaufende Mantelfläche (23) aufweist, wobei der größte Durchmesser der Hülse (6b) im Einbauzustand zu einem Schraubenkopf (5) der Verschraubung (1b) ausgerichtet ist.

2. Sicherung nach Anspruch 1, bei der die Hülse (6b) im Bereich eines Gewindeabschnittes (3) der Verschraubung (1 b) positioniert ist.

3. Sicherung nach Anspruch 1, die eine aus einem polymeren Werkstoff, vorzugsweise Polyamid, hergestellte Hülse (6b) einschließt.

## Claims

1. Captive and transport securing means for a screw connection (1b) which is used to fix components of a traction mechanism drive, preferably a tensioning roller (15, 20) or a tensioning device (8), comprising a cylindrical sleeve (6b) which is positionally fixed on a screw stem (2) in a form-fitting and/or frictional manner and is produced from an elastic material, wherein the screw connection (1b) is secured by means of said sleeve (6b), and wherein the sleeve (6b) can be inserted with a radial overlap into a bore intended for the screw connection (1b), **characterized in that** the sleeve (6b) is shrunk thermally onto the screw stem (2) and has a conically extending surface area (23), with, in the fitted state, the largest diameter of the sleeve (6b) being aligned with a screw head (5) of the screw connection (1b).

2. Securing means according to Claim 1, in which the sleeve (6b) is positioned in the region of a threaded section (3) of the screw connection (1b).

3. Securing means according to Claim 1, which includes a sleeve (6b) produced from a polymer material, preferably polyamide.

## Revendications

1. Sécurisation imperdable et pour le transport pour un vissage (1b), qui est utilisé pour fixer des composants d'un entraînement à moyen de traction, de préférence un galet-tendeur (15, 20) ou un dispositif de tensionnement (8), comprenant une douille cylindrique (6b) fabriquée en un matériau élastique, fixée en position par engagement par correspondance géométrique et/ou par force sur une tige de vis (2), le vissage (1b) étant sécurisé au moyen de cette douille (6b) et la douille (6b) pouvant être insérée avec un recouvrement radial dans un alésage prévu pour le vissage (1b), **caractérisée en ce que** la douille (6b) est emmanchée à chaud sur la tige de vis (2) et présente une surface d'enveloppe (23) s'étendant coniquement, le plus grand diamètre de la douille (6b) dans l'état monté étant orienté vers une tête de vis (5) du vissage (1b).

2. Sécurisation selon la revendication 1, dans laquelle la douille (6b) est positionnée dans la région d'une portion filetée (3) du vissage (1b).

3. Sécurisation selon la revendication 1, qui inclut une douille (6b) fabriquée en un matériau polymère, de préférence du polyamide.
